# EUROPEAN PATENT APPLICATION

(11) **EP 4 625 720 A1**
(43) Date of publication of application: **01.10.2025**
(21) Application number: 22966017.0
(22) Date of filing: 25.11.2022
(51) Int. Cl.: H01R 13/64, B62D 5/04, H02K 5/22

(54) **MOTOR DEVICE**

(71) Applicant: JTEKT Corporation, Kariya-shi, Aichi 448-8652 (JP)
(72) Inventor: SATO Yuto, Kariya-shi, Aichi 448-8652 (JP)
(74) Representative: Winter, Brandl - Partnerschaft mbB
(86) International application number: PCT/JP2022/043498
(87) International publication number: WO 2024/111111

(57) **Abstract**

A motor device (31) includes: a motor (40); and a plurality of connectors (53A, 53B, 53C, 54C) provided at an end of the motor and extending in the opposite direction from the motor. Each of the connectors includes a peripheral wall and a locking portion (LP1, LP2, LP3, LP4) provided on the peripheral wall and configured to keep the connector mated with a mating component. The locking portion is disposed such that, when viewed from the opposite side from the motor, the locking portion faces a direction perpendicular to a straight line (O) passing through the center of the motor, and such that, when viewed from a direction along the straight line, the locking portion does not overlap the peripheral walls of any of the connectors including the connector to which the locking portion itself belongs.

## Description

### TECHNICAL FIELD

The present disclosure relates to motor devices.

### BACKGROUND ART

Conventionally, there is a motor device with a plurality of connectors. Connectors are sometimes provided with a connector position assurance (CPA) mechanism. The CPA mechanism is a mechanism for ensuring that connectors are mated in the correct position.

The CPA mechanism includes a locking member. The locking member moves between an unlock position and a lock position in the mating direction of the connectors. Movement of the locking member is restricted until the mating connectors are mated in the correct position. Once the connectors are mated in the correct position, the locking member is allowed to move.

After the connectors are mated, the locking member is moved from the unlock position to the lock position. The connectors are thus kept mated. An operator can visually check the mating state of the connectors from the position of the locking member.

### Related Art Documents

### Patent Documents

Patent Document 1: Japanese Unexamined Patent Application Publication No. 2008-130546 (JP 2008-130546 A)

### SUMMARY OF THE INVENTION

### Problem to be Solved by the Invention

There are the following concerns about a motor device with a plurality of connectors. Depending on the density or positions of the connectors, it may be necessary to check the mating states of the connectors from multiple directions. This is troublesome. Moreover, depending on the mounting position or mounting attitude of the motor device with respect to an object on which the motor device is mounted, it may become difficult to check the mating states of the connectors.

### Means for Solving the Problem

A motor device according to an aspect of the present disclosure includes: a motor; and a plurality of connectors provided at an end of the motor and extending in the opposite direction from the motor. Each of the connectors includes a peripheral wall and a locking portion provided on the peripheral wall and configured to keep the connector mated with a mating component. The locking portion is disposed such that, when viewed from the opposite side from the motor, the locking portion faces a direction perpendicular to a straight line passing through the center of the motor, and such that, when viewed from a direction along the straight line, the locking portion does not overlap the peripheral walls of any of the connectors including the connector to which the locking portion itself belongs.

### BRIEF DESCRIPTION OF THE DRAWINGS

[FIG. 1] FIG. 1 is a configuration diagram of a steering operation mechanism according to an embodiment of a motor device.
[FIG. 2] FIG. 2 is an exploded perspective view of the motor device in FIG. 1.
[FIG. 3] FIG. 3 is a sectional view showing an unlocking state of a locking mechanism of a connector assembly in FIG. 2.
[FIG. 4] FIG. 4 is a sectional view showing a locking state of the locking mechanism of the connector assembly in FIG. 2.
[FIG. 5] FIG. 5 is a front view of a comparative example of the connector assembly in FIG. 2 as viewed from the opposite side from a motor.
[FIG. 6] FIG. 6 is a front view of the connector assembly in FIG. 2 as viewed from the opposite side from the motor.

### MODES FOR CARRYING OUT THE INVENTION

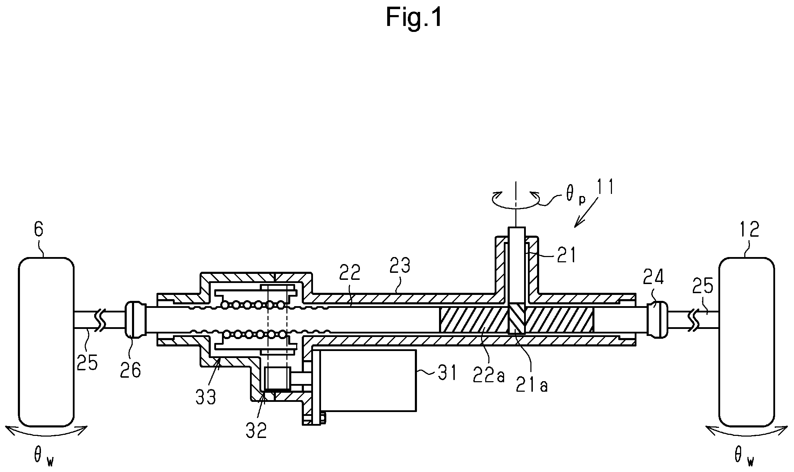

A motor device according to an embodiment will be described. The motor device is mounted on, for example, a steering system of a vehicle.
As shown in FIG. 1, the steering system of the vehicle includes a steering operation mechanism 11. The steering operation mechanism 11 is a mechanism part that steers steered wheels 12 of the vehicle according to steering of a steering wheel.

The steering operation mechanism 11 includes a pinion shaft 21, a steered shaft 22, and a housing 23. The housing 23 rotatably supports the pinion shaft 21. The housing 23 also houses the steered shaft 22 such that the steered shaft 22 can reciprocate in an axial direction. The pinion shaft 21 is provided so as to intersect the steered shaft 22. Pinion teeth 21a of the pinion shaft 21 mesh with rack teeth 22a of the steered shaft 22. Both ends of the steered shaft 22 are connected to the steered wheels 12 via rack ends 24 and tie rods 25.

The steering system is a steer-by-wire steering system or an electric power steering system. In the case where the steering system is a steer-by-wire steering system, the pinion shaft 21 is not mechanically connected to the steering wheel. In the case where the steering system is an electric power steering system, the pinion shaft 21 is mechanically connected to the steering wheel via a steering shaft.

The steering operation mechanism 11 includes a motor device 31, a transmission mechanism 32, and a conversion mechanism 33. The motor device 31 is a source of a steering force to be applied to the steered shaft 22. The steering force is a force for steering the steered wheels 12. The transmission mechanism 32 is, for example, a belt transmission mechanism. The transmission mechanism 32 transmits rotation of the motor 31 to the conversion mechanism 33. The conversion mechanism 33 is, for example, a ball screw mechanism. The conversion mechanism 33 converts the rotation transmitted via the transmission mechanism 32 to axial motion of the steered shaft 22. As the steered shaft 22 moves in the axial direction, the steered angle θ_{w} of the steered wheels 12 is changed. The steered shaft 22 is a shaft to be driven by the motor device 31.

In the case where the steering system is a steer-by-wire steering system, the motor device 31 functions as a steering motor. The steering motor generates a steering force that is a force for steering the steered wheels 12. In the case where the steering system is an electric power steering system, the motor device 31 functions as an assist motor. The assist motor generates an assist force that is a force for assisting in operation of the steering wheel.

### <Configuration of Motor Device 31>

Next, the configuration of the motor device 31 will be described.

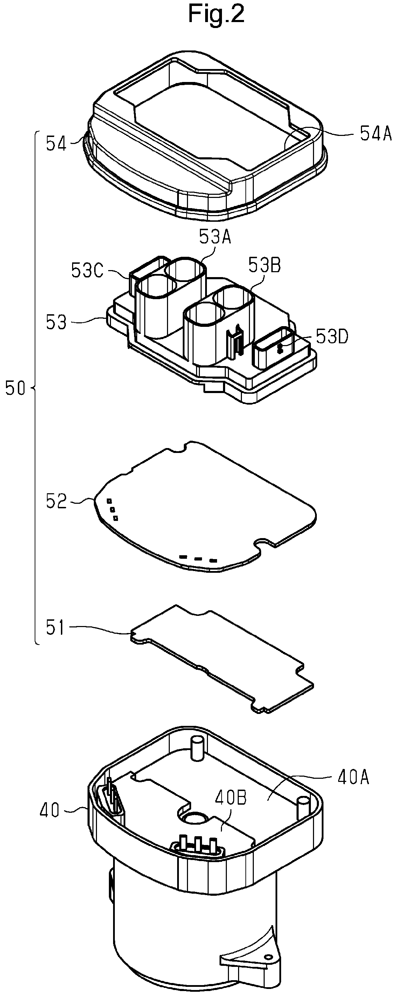

As shown in FIG. 2, the motor device 31 includes a motor 40 and a control device 50. The motor 40 is, for example, a three-phase brushless motor. The motor 40 includes, for example, winding groups of two systems. The control device 50 is attached to an end of the motor 40. The control device 50 independently controls power supply to the winding groups of the two systems.

The control device 50 includes a control board 51, a power board 52, a connector assembly 53, and a cover 53.
The control board 51 includes electronic components for controlling power supply to the motor 40. The electronic components include two microcomputers corresponding to the winding groups of the two systems. The microcomputers are integrated circuits in the form of a chip.

The power board 52 includes electronic components for supplying electric power to the motor 40 through control by the control board 51. The electronic components include two inverter circuits corresponding to the winding groups of the two systems. Each inverter circuit includes a plurality of FETs (Field Effect Transistors).

A first board housing portion 40A and a second board housing portion 40B are provided at the end of the motor 40. The depth of the first board housing portion 40A is greater than the depth of the second board housing portion 40B. The control board 51 is housed in the first board housing portion 40A. The power board 52 is housed in the second board housing portion 40B so as to cover the control board 51. The control board 51 and the power board 52 are connected to each other via an inter-board connector.

The connector assembly 53 is made of synthetic resin. The connector assembly 53 includes a first power connector 53A and a second power connector 53B. The first power connector 53A extends in the opposite direction from the motor 40 and includes a peripheral wall that is open in the opposite direction from the motor 40. The peripheral wall has, for example, a rounded rectangular cross section. The first power connector 53A includes a power terminal and a ground terminal. A power plug that is a mating plug is mated with the first power connector 53A. The power plug is provided at a first end of a power line. A second end of the power line is connected to a direct current power supply such as an in-vehicle battery. Electric power from the direct current power supply is supplied to the control board 51 and the power board 52 via the power terminal and the ground terminal. The second power connector 53B has the same configuration as the first power connector 53A.

The connector assembly 53 includes a first signal connector 53C and a second signal connector 53D. The first signal connector 53C includes a peripheral wall extending in the opposite direction from the motor 40. The peripheral wall has, for example, a rounded rectangular cross section. The first signal connector 53C includes a signal terminal. A signal plug that is a mating plug is mated with the first signal connector 53C. The signal plug is provided at a first end of a signal line. A second end of the signal line is connected to a vehicle control device. The control board 51 and the vehicle control device send and receive signals to and from each other via the signal terminal. The second signal connector 53D has the same configuration as the first signal connector 53C.

The cover 54 is made of synthetic resin. The cover 54 is a box-shaped member that is open toward the motor 40. An end wall of the cover 54 has a fitting hole 54A. The outer peripheral portion of the connector assembly 53 is fitted in the fitting hole 54A. Each connector (53A, 53B, 53C, 54C) of the connector assembly 53 passes through the fitting hole 54A and protrudes beyond the end wall of the cover 54 to the outside of the cover 53. The cover 54 is attached to the end of the motor 40. The cover 54 covers the first board housing portion 40A and the second board housing portion 40B of the motor 40.

### <Connector Locking Mechanism>

Next, a connector locking mechanism will be described.

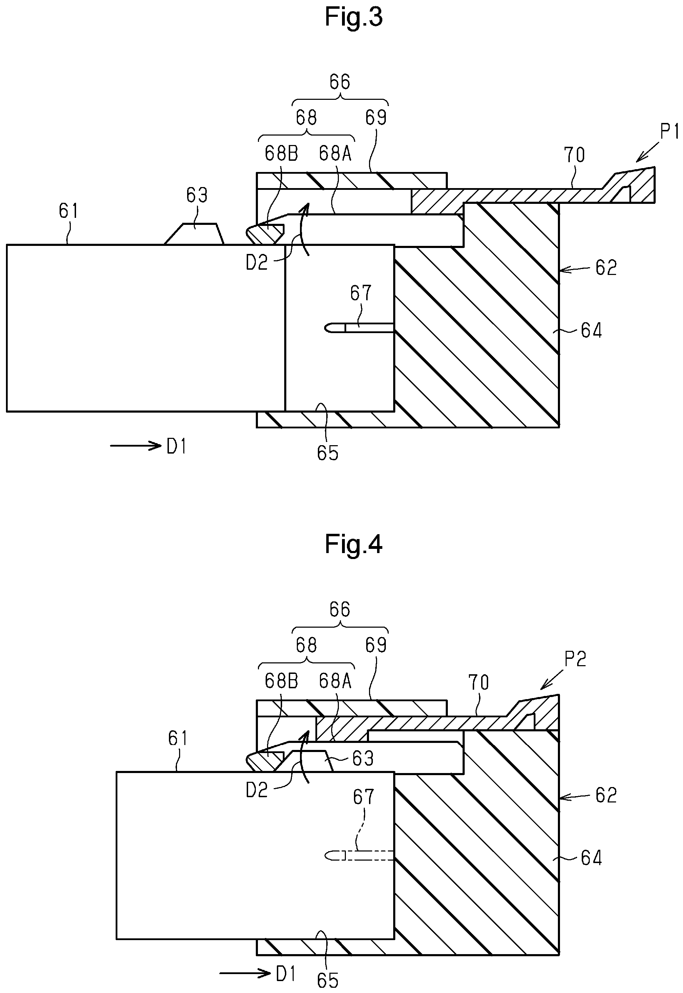

As shown in FIG. 3, a first sample connector 61 and a second sample connector 62 will be described as an example.

The first sample connector 61 is mated in the second sample connector 62. The first sample connector 61 includes a first locking mechanism part 63. The first locking mechanism part 63 is a protrusion provided on the outer peripheral surface of the first sample connector 61.

The second sample connector 62 includes a housing 64 made of synthetic resin. The housing 64 includes a peripheral wall, a mating portion 65, and a second locking mechanism part 66. The second locking mechanism part 66 is provided on the peripheral wall and includes a stopper portion 68 and a holding portion 69.

The mating portion 65 is a recessed portion in which the first sample connector 61 is mated, and is a portion surrounded by the peripheral wall of the housing 64. The mating portion 65 is open in the opposite direction to a mating direction D1 of the first sample connector 61. A terminal 67 is held inside the mating portion 65.

The stopper portion 68 is in the shape of a frame. The stopper portion 68 includes two arms 68A (only one is shown in FIG. 3) and a retaining portion 68B. The arms 68A extend from an end wall of the second housing 62 in the opposite direction to the mating direction D1. The two arms 68A are spaced apart from each other in a direction perpendicular to the mating direction D1. The retaining portion 68B extends in the direction perpendicular to the mating direction D1 and connects the distal ends of the two arms 68A. The distal end is the opposite end of the arm 68A from the end wall of the second sample connector 62. The arms 68A are elastically bendable at their proximal ends in a direction D2 away from the mating portion 65. The proximal end is the end of the arm 68A that is connected to the end wall of the second sample connector 62. When the arms 68A are bent, the retaining portion 68B is also moved in the direction D2.

The holding portion 69 is located on the opposite side of the arms 68A from the mating portion 65 in a direction perpendicular to the mating direction D1. The holding portion 69 protrudes outward from the outer peripheral surface of the second sample connector 62. The holding portion 69 extends along the arms 68A. The holding portion 69 is provided so as to surround the outside of the two arms 68A. The holding portion 69 includes two side walls located outward of the two arms 68A and an end wall connecting the two side walls. There is a clearance between the end wall of the holding portion 69 and the arms 68A in the direction perpendicular to the mating direction D1. The space defined by the holding portion 69 and the two arms 68A has a rectangular cross section.

The second sample connector 62 has a locking member 70. The locking member 70 is made of synthetic resin and is in the form of a flat plate. A first end of the locking member 70 is inserted into the holding portion 69 and held by the holding portion 69. A second end of the locking member 70 is exposed to the outside of the holding portion 69. The second end is the opposite end of the locking member 70 from the first end. The locking member 70 can be pushed into the holding portion 69 by applying an external force to the second end of the locking member 70. At least the first end of the locking member 70 has a thickness approximately equal to the clearance between the end wall of the holding portion 69 and the arms 68A. The locking member 70 has a rectangular cross section.

The locking member 70 is movable between an unlock position P1 shown in FIG. 3 and a lock position P2 shown in FIG. 4.
The unlock position P1 is a position of the locking member 70 where the first end is located at a position corresponding to the proximal ends of the arms 68A. When the locking member 70 is in the unlock position P1, there is a clearance between the end wall of the holding portion 69 and the arms 68A excluding their proximal ends. Therefore, the distal ends of the arms 68A are allowed to elastically bend in the direction D2 away from the mating portion 65. The retaining portion 68B provided at the distal ends of the arms 68A is also allowed to move in the direction D2 away from the mating portion 65.

The lock position P2 is a position of the locking member 70 where the first end is located at a position corresponding to near the distal ends of the arms 68A. When the locking member 70 is in the lock position P2, the first end of the locking member 70 is interposed between the end wall of the holding portion 69 and the portions of the arms 68A that are located near the distal ends of the arms 68A. Therefore, the distal ends of the arms 68A are not allowed to elastically bend in the direction D2 away from the mating portion 65. The retaining portion 68B provided at the distal ends of the arms 68A is also not allowed to move in the direction D2 away from the mating portion 65.

### <Operation of Locking Mechanism>

The locking mechanism for the first sample connector 61 and the second sample connector 62 operates as follows.

As shown in FIG. 4, when the first sample connector 61 is mated with the second sample connector 62, the first locking mechanism part 63 comes into contact with the retaining portion 68B of the second locking mechanism part 66 in the mating direction D1. As the first sample connector 61 is pushed into the second sample connector 62, the retaining portion 68B moves in the direction D2 away from the mating portion 65. The retaining portion 68B eventually goes over the first locking mechanism part 63 and elastically returns to its original position. The retaining portion 66 engages with the first locking mechanism part 63 in the opposite direction to the mating direction D1. This restricts movement of the first sample connector 61 in the opposite direction to the mating direction D1.

After the first sample connector 61 is mated with the second sample connector 62, the locking member 70 is moved from the unlock position P1 to the lock position P2. As a result, the distal ends of the arms 68A are not allowed to bend in the direction D2 away from the mating portion 65, and the retaining portion 68B is also not allowed to move in the direction D2 away from the mating portion 65. The retaining portion 68B retaining the first locking mechanism part 63 is less likely to be disengaged therefrom as a result of moving in the direction D2 away from the mating portion 65. It is therefore ensured that the first sample connector 61 and the second sample connector 62 are in the mated state.

An operator can recognize the mating state of the first sample connector 61 and the second sample connector 62 by, for example, visually checking the position of the locking member 70. The locking mechanism is also a CPA mechanism (connector position assurance mechanism). The CPA mechanism is a mechanism for ensuring that the first sample connector 61 and the second sample connector 62 are mated in the correct position.

Regarding the locking mechanism, the first power connector 53A and the second power connector 53B have the same configuration as the second sample connector 62. A locking portion of the first power connector 53A and a locking portion of the second power connector 53B each have the same configuration as the second locking mechanism part 66. Regarding the locking mechanism, the power plugs that are mated with the first power connector 53A and the second power connector 53B have the same configuration as the first sample connector 61. Locking portions of the power plugs have the same configuration as the first locking mechanism part 63.

Regarding the locking mechanism, the first signal connector 53C and the second signal connector 53C have the same configuration as the first sample connector 61. A locking portion of the first signal connector 53C and a locking portion of the second signal connector 53C each have the same configuration as the first locking mechanism part 63. Regarding the locking mechanism, the signal plugs that are mated with the first signal connector 53C and the second signal connector 53D have the same configuration as the second sample connector 62. Locking portions of the signal plugs have the same configuration as the second locking mechanism part 66.

### <Comparative Example of Connector Layout>

Next, a comparative example of the layout of the connectors (53A, 53B, 53C, 54C) will be described.

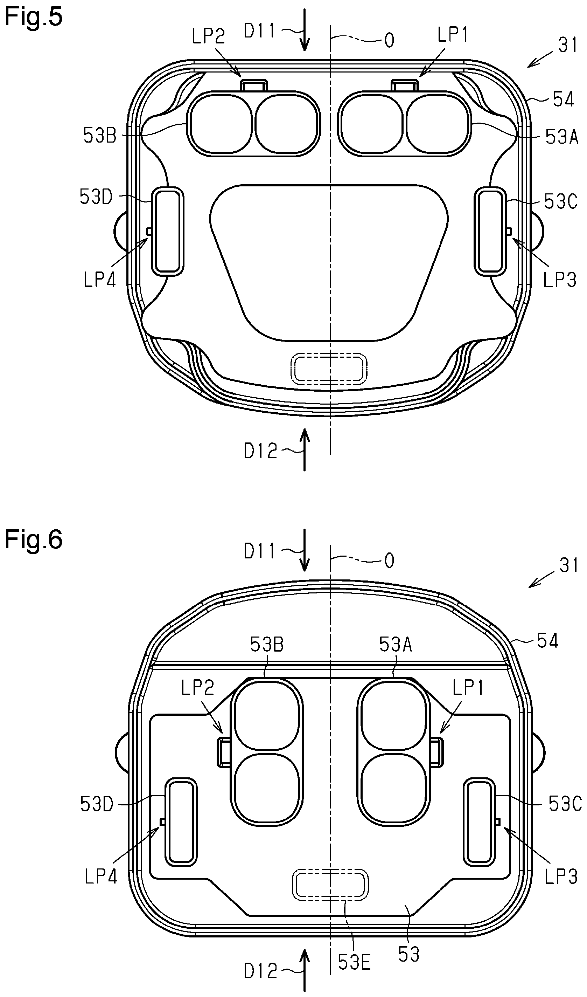

As shown in FIG. 5, each connector (53A, 53B, 53C, 54C) is disposed in the peripheral portion of the cover 54. When viewed from the opposite side from the motor 40, the first power connector 53A and the second power connector 53B are arranged symmetrically with respect to a center line O. The center line O is, for example, a straight line passing through the center of the motor 40 or the connector assembly 53 when viewed from the opposite side from the motor 40. As used herein, "when viewed from the opposite side from the motor 40" can be rephrased as "when viewed from the direction in which the connectors protrude (or extend)." In the present embodiment, the center line O is a line that intersects the axis of the motor 40 at right angles. In this case, "when viewed from the opposite side from the motor 40" can be rephrased as "when viewed from a direction along the axis of the motor 40."

The first power connector 53A and the second power connector 53B are disposed at the same position in a direction along the center line O. That is, the first power connector 53A and the second power connector 53B face each other in a direction perpendicular to the center line O. When viewed from the opposite side from the motor 40, the long side of the first power connector 53A and the long side of the second power connector 53B extend in the direction perpendicular to the center line O.

When viewed from the opposite side from the motor 40, the first signal connector 53C and the second signal connector 53C are arranged symmetrically with respect to the center line O. The first signal connector 53C and the second signal connector 53C are disposed at the same position in the direction along the center line O. That is, the first signal connector 53C and the second signal connector 53C face each other in the direction perpendicular to the center line O. The first signal connector 53C and the second signal connector 53C are disposed at a different position from the first power connector 53A and the second power connector 53B in the direction along the center line O. When viewed from the opposite side from the motor 40, the long side of the first signal connector 53C and the long side of the second signal connector 53C extend along the center line O.

When viewed from the opposite side from the motor 40, a first locking portion LP1 faces outward from the motor device 31 in the direction along the central axis O. The first locking portion LP1 is the locking portion of the first power connector 53A. When viewed from the opposite side from the motor 40, a second locking portion LP2 faces outward from the motor device 31 in the direction along the central axis O. The second locking portion LP2 is the locking portion of the second power connector 53B. The first locking portion LP1 and the second locking portion LP2 face the same direction in the direction along the central axis O.

When viewed from the opposite side from the motor 40, a third locking portion LP3 faces outward from the motor device 31 in the direction perpendicular to the central axis O. The third locking portion LP3 is the locking portion of the first signal connector 53C. When viewed from the opposite side from the motor 40, a fourth locking portion LP4 faces outward from the motor device 31 in the direction perpendicular to the central axis O. The fourth locking portion LP4 is the locking portion of the second signal connector 53D. The third locking portion LP3 and the fourth locking portion LP4 face opposite directions in the direction perpendicular to the center line O.

There are the following concerns when the comparative example shown in FIG. 5 is used. All of the first to fourth locking portions LP1 to LP4 are visible from a first direction D11 along the center line O. It is therefore possible to visually check the positions of the locking members 70 corresponding to the first to fourth locking portions LP1 to LP4.

However, only the third locking portion LP3 and the fourth locking portion LP4 are visible from a second direction D12 along the center line O. The second direction D12 is the opposite direction to the first direction. The first locking portion LP1 is not visible because it is hiding behind the peripheral wall of the first power connector 53A. It is therefore impossible to visually check the position of the locking member 70 corresponding to the first locking portion LP1. Like the first locking portion LP1, the second locking portion LP2 is also not visible. It is therefore impossible to visually check the position of the locking member 70 corresponding to the second locking portion LP2.

In the comparative example shown in FIG. 5, the mating states of all the connectors (53A, 53B, 53C, 54C) can be checked only from one direction. Accordingly, depending on the mounting position or mounting attitude of the motor device 31 with respect to the steering system, it may be difficult to visually check the positions of the first to fourth locking portions LP1 to LP4, and therefore, the locking members 70 corresponding to the first to fourth locking portions LP1 to LP4.

### <Connector Layout of Embodiment>

Therefore, in the present embodiment, the connectors (53A, 53B, 53C, 54C) are arranged as follows.

As shown in FIG. 6, when viewed from the opposite side from the motor 40, the first power connector 53A and the second power connector 53B are disposed near the center of the cover 54. When viewed from the opposite side from the motor 40, the first power connector 53A and the second power connector 53B are arranged symmetrically with respect to a center line O. The center line O is, for example, a straight line passing through the center of the motor 40 or the connector assembly 53 when viewed from the opposite side from the motor 40. The first power connector 53A and the second power connector 53B are disposed at the same position in a direction along the center line O. That is, the first power connector 53A and the second power connector 53B face each other in a direction perpendicular to the center line O. When viewed from the opposite side from the motor 40, the long side of the first power connector 53A and the long side of the second power connector 53B extend in the direction along the center line O.

When viewed from the opposite side from the motor 40, the first signal connector 53C and the second signal connector 53C are disposed near the periphery of the cover 54. When viewed from the opposite side from the motor 40, the first signal connector 53C and the second signal connector 53C are arranged symmetrically with respect to the center line O. The first signal connector 53C and the second signal connector 53C are disposed at the same position in the direction along the center line O. That is, the first signal connector 53C and the second signal connector 53C face each other in the direction perpendicular to the center line O. The first signal connector 53C and the second signal connector 53C are disposed at a different position from the first power connector 53A and the second power connector 53B in the direction along the center line O.

However, when viewed from the direction perpendicular to the center line O, part of the peripheral wall of the first signal connector 53C overlaps part of the peripheral wall of the first power connector 53A. When viewed from the direction perpendicular to the center line O, part of the peripheral wall of the second signal connector 53D overlaps part of the peripheral wall of the second power connector 53B. When viewed from the opposite side from the motor 40, the long side of the first signal connector 53C and the long side of the second signal connector 53C extend along the center line O.

When viewed from the opposite side from the motor 40, a first locking portion LP1 faces outward from the motor device 31 in the direction perpendicular to the central axis O. The first locking portion LP1 is the locking portion of the first power connector 53A. When viewed from the opposite side from the motor 40, a second locking portion LP2 faces outward from the motor device 31 in the direction along the central axis O. The second locking portion LP2 is the locking portion of the second power connector 53B. The first locking portion LP1 and the second locking portion LP2 face opposite directions in the direction perpendicular to the central axis O.

When viewed from the opposite side from the motor 40, a third locking portion LP3 faces outward from the motor device 31 in the direction perpendicular to the central axis O. The third locking portion LP3 is the locking portion of the first signal connector 53C. When viewed from the opposite side from the motor 40, a fourth locking portion LP4 faces outward from the motor device 31 in the direction perpendicular to the central axis O. The fourth locking portion LP4 is the locking portion of the second signal connector 53D. The third locking portion LP3 and the fourth locking portion LP4 face opposite directions in the direction perpendicular to the central axis O.

The four connectors (53A, 53B, 53C, 54C) are arranged spaced apart from each other in the direction perpendicular to the center line O. Each of the first to fourth locking portions (LP1 to LP4) only has to be disposed such that, when viewed from the direction along the center line O, the locking portion does not overlap the peripheral walls of any of the connectors (53A, 53B, 53C, 54C) including the connector to which the locking portion itself belongs. The direction along the center line O is the first direction D11 or the second direction D12.

Therefore, all of the first to fourth locking portions LP1 to LP4 are visible from the first direction D11 along the center line O. All of the first to fourth locking portions LP1 to LP4 are also visible from the second direction D12 along the center line O. That is, it is possible to visually check the positions of the locking members 70 corresponding to the first to fourth locking portions LP1 to LP4 from two directions, namely the first direction D11 and the second direction D12.

When viewed from the opposite side from the motor 40, the first locking portion LP1 and the third locking portion LP3 face outward from the motor device 31 in the direction perpendicular to the center line O. The first locking portion LP1 and the third locking portion LP3 are disposed so as not to overlap each other when viewed from the direction perpendicular to the center line O. There are empty spaces outside the first locking portion LP1 and outside the third locking portion LP3 in the direction perpendicular to the center line O.

When viewed from the opposite side from the motor 40, the second locking portion LP2 and the fourth locking portion LP4 face outward from the motor device 31 in the direction perpendicular to the center line O. The second locking portion LP2 and the fourth locking portion LP4 are disposed so as not to overlap each other when viewed from the direction perpendicular to the center line O. There are empty spaces outside the second locking portion LP2 and outside the fourth locking portion LP4 in the direction perpendicular to the center line O.

In the case where the steering system is an electric power steering system, the connector assembly 53 is provided with a sensor connector 53E. For example, a torque sensor is connected to the sensor connector 53E via a signal line. The torque sensor detects steering torque applied to the steering wheel. When viewed from the opposite side from the motor 40, the sensor connector 53E is disposed at, for example, a position on the center line O near the periphery of the cover 54. The sensor connector 53E is disposed so as not to overlap the first to fourth locking portions LP1 to LP4 when viewed from the direction along the central axis O.

### <Effects of Embodiment>

The present embodiment has the following effects.
(1) When viewed from the opposite side from the motor 40, the first to fourth locking portions LP1 to LP4 face outward from the motor device 31 in the direction perpendicular to the central axis O. Each locking portion (LP1 to LP4) is disposed such that, when viewed from the direction along the center line O, the locking portion does not overlap the peripheral walls of any of the connectors (53A, 53B, 53C, 54C) including the connector to which the locking portion itself belongs. It is therefore possible to visually check the positions of the locking members 70 corresponding to the first to fourth locking portions LP1 to LP4 from two directions, namely the first direction D11 and the second direction D12 along the central axis O.
(2) It is possible to visually check the positions of all of the locking members 70 from the first direction D11 or the second direction D12. Since the positions of the locking members 70 do not have to be checked from multiple directions, the work of checking the mating state of each connector (53A, 53B, 53C, 54C) can be easily performed.
(3) Since the locking members 70 are visible in a wider range, flexibility in mounting position or mounting attitude of the motor device 31 with respect to the steering system is increased. This increases the ease of mounting the motor device 31 on the steering system or the vehicle. There is no need to provide a plurality of types of motor devices 31 with different arrangements of the connectors (53A, 53B, 53C, 54C) according to the mounting position or mounting attitude of the motor device 31 with respect to the steering system.
(4) There are empty spaces outside the first locking portion LP1 and outside the third locking portion LP3 in the direction perpendicular to the center line O. There are also empty spaces outside the second locking portion LP2 and outside the fourth locking portion LP4 in the direction perpendicular to the center line O. This ensures operability of the locking member 70.
(5) The first power connector 53A and the second power connector 53B are symmetrical with respect to the central axis O. The first signal connector 53C and the second signal connector 53D are symmetrical with respect to the central axis O. This facilitates arrangement of electronic components on the control board 51 or the power board 52. The first power connector 53A and the first signal connector 53C are a set of connectors included in a first system. The second power connector 53B and the second signal connector 53D are a set of connectors included in a second system.
(6) The peripheral wall of the first power connector 53A and the peripheral wall of the first signal connector 53C partially overlap each other in the direction along the center line O. The peripheral wall of the second power connector 53B and the peripheral wall of the second signal connector 53D partially overlap each other in the direction along the center line O. The size of the motor device 31 can therefore be reduced in the direction along the center line O.
(7) Each of the first to fourth locking portions LP1 to LP4 protrudes from the peripheral surface of a corresponding one of the connectors (53A, 53B, 53C, 54C). That is, the first to fourth locking portions LP1 to LP4 have an undercut feature. An undercut feature is a feature that cannot be ejected from a mold in the opening and closing direction of the mold when the connector assembly 53 that is a molded product is removed from the mold. The opening and closing direction is, for example, the direction in which the connectors (53A, 53B, 53C, 54C) extend. In this regard, there are empty spaces outside each of the first to fourth locking portions LP1 to LP4 in the direction perpendicular to the center line O. It is therefore possible to mold the first to fourth locking portions LP1 to LP4 using a slide core. The slide core is movable in, for example, a direction perpendicular to the opening and closing direction of the mold in conjunction with the opening and closing operation of the mold. The connector assembly 53 having an undercut feature can thus be appropriately molded.

### <Other Embodiments>

The present embodiment may be modified as follows.
- The first power connector 53A and the second power connector 53B may not be symmetrical with respect to the central axis O. The first signal connector 53C and the second signal connector 53D may not be symmetrical with respect to the central axis O. Each locking portion (LP1 to LP4) only has to be disposed such that, when viewed from the direction along the center line O, the locking portion does not overlap the peripheral walls of any of the connectors (53A, 53B, 53C, 54C) including the connector to which the locking portion itself belongs.
- The peripheral wall of the first power connector 53A and the peripheral wall of the first signal connector 53C may not partially overlap each other in the direction perpendicular to the center line O. The peripheral wall of the second power connector 53B and the peripheral wall of the second signal connector 53D may not partially overlap each other in the direction perpendicular to the center line O. Each locking portion (LP1 to LP4) only has to be disposed such that, when viewed from the direction along the center line O, the locking portion does not overlap the peripheral walls of any of the connectors (53A, 53B, 53C, 54C) including the connector to which the locking portion itself belongs.
- When viewed from the opposite side from the motor 40, the first to fourth locking portions LP1 to LP4 may face inside the motor device 31 in the direction perpendicular to the central axis O. When viewed from the opposite side from the motor 40, either the first locking portion LP1 or the third locking portion LP3 may face inside the motor device 31 in the direction perpendicular to the central axis O. When viewed from the opposite side from the motor 40, either the second locking portion LP2 or the fourth locking portion LP4 may face inside the motor device 31 in the direction perpendicular to the central axis O. Each locking portion (LP1 to LP4) only has to be disposed such that, when viewed from the direction along the center line O, the locking portion does not overlap the peripheral walls of any of the connectors (53A, 53B, 53C, 54C) including the connector to which the locking portion itself belongs.
- The first locking portion LP1 and the third locking portion LP3 may overlap each other when viewed from the direction perpendicular to the center line O. The second locking portion LP2 and the fourth locking portion LP4 may overlap each other when viewed from the direction perpendicular to the center line O. Each locking portion (LP1 to LP4) only has to be disposed such that, when viewed from the direction along the center line O, the locking portion does not overlap the peripheral walls of any of the connectors (53A, 53B, 53C, 54C) including the connector to which the locking portion itself belongs.
- The motor 40 may include a winding group of a single system. Each of the control system and the power supply system for the motor 40 may be a single system. In this case, the connector assembly 53 may have a configuration in which either the first power connector 53A and the first signal connector 53C or the second power connector 53B and the second signal connector 53D are omitted.

## Claims

1. A motor device comprising:
a motor; and
a plurality of connectors provided at an end of the motor and extending in an opposite direction from the motor, wherein:
each of the connectors includes a peripheral wall and a locking portion, the locking portion being provided on the peripheral wall and configured to keep the connector mated with a mating component; and
the locking portion is disposed
such that, when viewed from an opposite side from the motor, the locking portion faces a direction perpendicular to a straight line passing through a center of the motor, and
such that, when viewed from a direction along the straight line, the locking portion does not overlap the peripheral walls of any of the connectors including the connector to which the locking portion itself belongs.

2. The motor device according to claim 1, wherein:
the plurality of connectors includes a first connector and a second connector that are located at different positions in the direction along the straight line; and
the locking portion of the first connector and the locking portion of the second connector are disposed so as to face outward from the motor in the direction perpendicular to the straight line.

3. The motor device according to claim 2, wherein the locking portion of the first connector and the locking portion of the second connector are disposed so as not to overlap each other when viewed from the direction perpendicular to the straight line.

4. The motor device according to claim 3, wherein the peripheral wall of the first connector and the peripheral wall of the second connector partially overlap each other when viewed from the direction perpendicular to the straight line.

5. The motor device according to any one of claims 2 to 4, wherein:
the first connector includes two first connectors arranged symmetrically with respect to the straight line; and
the second connector includes two second connectors arranged symmetrically with respect to the straight line.
